# EUROPEAN PATENT APPLICATION

(11) **EP 1 841 276 A2**
(43) Date of publication of application: **03.10.2007**
(21) Application number: 07251046.4
(22) Date of filing: 14.03.2007
(51) Int. Cl.: H04Q 7/38

(54) **Base station, radio terminal and radio communication method**

(30) Priority: 30.03.2006 JP 2006095133
(71) Applicant: KABUSHIKI KAISHA TOSHIBA, Tokyo 105-8001 (JP)
(72) Inventor: Sakata, Ren c/o IP Division, Toshiba Corporation, Tokyo (JP)
(74) Representative: Jenkins, Peter David

(57) **Abstract**

There is provided with a radio terminal which is assigned one or more frequency channel to carry out downlink communication with a base station, including: a reception unit configured to receive signals of a plurality of frequency channels from the base station; a quality measuring unit configured to measure communication quality of each frequency channel; a priority setting unit configured to set priority for each frequency channel; a transmission unit configured to transmit communication quality information indicating communication quality of each frequency channel in descending order of priority to the base station; and a control unit configured to provide a signal instructing to stop transmission of the communication quality information to the transmission unit upon receiving a transmission stop instruction for instructing to stop transmission of the communication quality information from the base station.

## Description

### BACKGROUND OF THE INVENTION

### Field of the Invention

The present invention relates to a base station, radio terminal and radio communication method.

### Related Art

A communication scheme such as OFDM (Orthogonal Frequency Division Multiplexing) communication scheme or multicarrier CDMA (Code Division Multiple Access) communication scheme whereby digital signals are transmitted and received by being mapped to a plurality of subcarriers over wider bandwidth is attracting attention in recent years. These communication schemes make it possible to increase transmission rate and improve resistance to frequency selective fading. On the other hand, OFDMA (Orthogonal Frequency Division Multiple Access) which provides subbands (frequency channels) obtained by grouping a plurality of subcarriers to allow simultaneous communications with a plurality of terminals using the respective subbands is also known. A method of improving a transmission rate in an OFDMA communication is also known which takes advantage of the fact that frequency characteristics of channels vary among a plurality of communication destinations and selectively assigns subbands of good communication quality to respective communication destinations. Assigning subbands of good communication quality to the respective communication destinations requires a base station to acquire frequency characteristics of channels for the respective subbands. JP-A 2005-244958 (KOKAI) describes a method whereby a terminal measures communication quality of subbands and feeds back quality information (CQI: Channel Quality Indicator) of subbands (frequency channels) in good channel conditions to a base station.

However, according to the method described in JP-A 2005-244958. (KOKAI), the terminal feeds back CQIs of only subbands in a good channel condition, and therefore if these subbands are assigned to some other terminals, there is a problem that the subbands cannot be assigned to the terminal.

On the other hand, there may also be a method of feeding back CQIs of all subbands, but adopting this method causes the amount of information of feedback from the terminal to the base station to become enormous, causing a problem that the transmission rate on the uplink to the base station decreases.

### SUMMARY OF THE INVENTION

According to an aspect of the present invention, there is provided with a radio communication method for carrying out downlink communication from a base station to radio terminals using a plurality of frequency channels, comprising:
receiving signals of the frequency channels from the base station at each radio terminal;
measuring communication quality of the frequency channels at each radio terminal;
setting priority for each frequency channel based on communication quality of the frequency channels at each radio terminal;
transmitting communication quality information indicating communication quality of each frequency channel in descending order of priority from each radio terminal to the base station;
receiving the communication quality information from each radio terminal at the base station;
scheduling frequency channels to be assigned to the radio terminals based on communication quality information from each radio terminal;
notifying a transmission stop instruction for instructing radio terminals for which the scheduling is completed to stop transmission of the communication quality information, to the radio terminals; and
stopping transmission of the communication quality information from radio terminals which has received the transmission stop instruction to the base station.

According to an aspect of the present invention, there is provided with a radio terminal which is assigned one or more frequency channel to carry out downlink communication with a base station, comprising:
a reception unit configured to receive signals of a plurality of frequency channels from the base station;
a quality measuring unit configured to measure communication quality of each frequency channel;
a priority setting unit configured to set priority for each frequency channel;
a transmission unit configured to transmit communication quality information indicating communication quality of each frequency channel in descending order of priority to the base station; and
a control unit configured to provide a signal instructing to stop transmission of the communication quality information to the transmission unit upon receiving a transmission stop instruction for instructing to stop transmission of the communication quality information from the base station.

According to an aspect of the present invention, there is provided with a base station which carries out downlink communication with radio terminals using a plurality of frequency channels, comprising:
a reception unit configured to receive communication quality information indicating communication quality of each frequency channel from each of the radio terminals intermittently;
a scheduling unit configured to schedule frequency channels to be assigned to the radio terminals based on the communication quality information received from each radio terminal; and
a notifying unit to configured to notify a transmission stop instruction for instructing radio terminals for which the scheduling is completed to stop transmission of the communication quality information, to the radio terminals.

### BRIEF DESCRIPTION OF THE DRAWINGS

FIG. 1 schematically shows the configuration of an embodiment of a radio communication system;
FIG. 2 shows a mode of use of downlink frequencies;
FIG. 3 shows a mode of use of uplink frequencies;
FIG. 4 is a block diagram showing the configuration of an embodiment of a base station according to the present invention;
FIG. 5 illustrates the configuration of a CQI signal;
FIG. 6 is a block diagram showing the configuration of an embodiment of a terminal according to the present invention;
FIG. 7 is a sequence chart of the radio communication system in FIG. 1;
FIG. 8 is a flow chart showing a flow of operation of the base station;
FIG. 9 is a flow chart showing a flow of operation of the terminal;
FIG. 10 shows an example of signal arrangement of downlink;
FIG. 11 illustrates a state of channels that each terminal estimates;
FIG. 12 illustrates an example of frame format of an uplink;
FIG. 13 illustrates an example of arrangement of uplink signals;
FIG. 14 illustrates subband assignment set by the base station; and
FIG. 15 shows an example of communication quality information fed back from the terminal.

### DETAILED DESCRIPTION OF THE INVENTION

Hereafter, an embodiment of the present invention will be described more specifically with reference to the attached drawings.

### (First Embodiment)

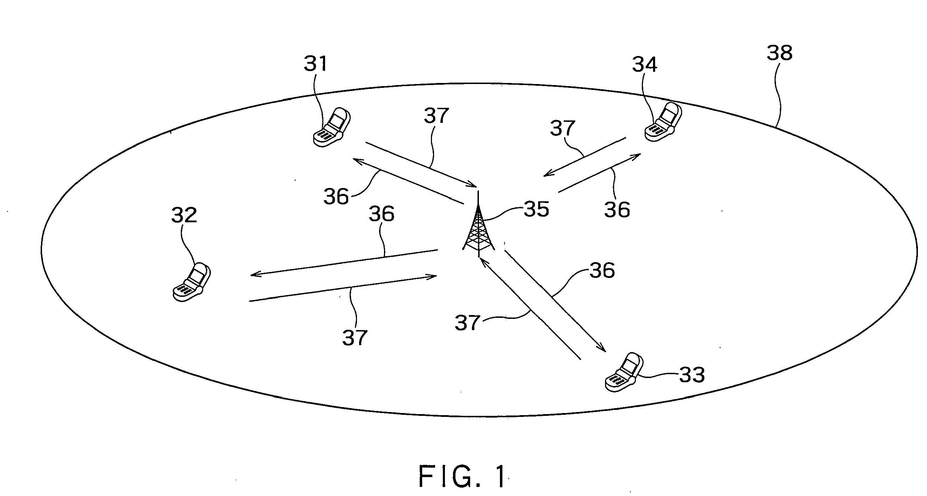

FIG. 1 shows an example of a radio communication system according to this embodiment. This radio communication system includes a base station 35 and a plurality of radio terminals (hereinafter simply referred to as "terminals") 31, 32, 33 and 34. The terminal 31, terminal 32, terminal 33 and terminal 34 are located within reach of radio signals from the base station 35, that is, within a communication area (cell) 38. Suppose radio signal transmission from the base station 35 to the respective terminals 31 to 34 is called a "downlink 36" and radio signal transmission from the respective terminals 31 to 34 to the base station 35 is called an "uplink 37."

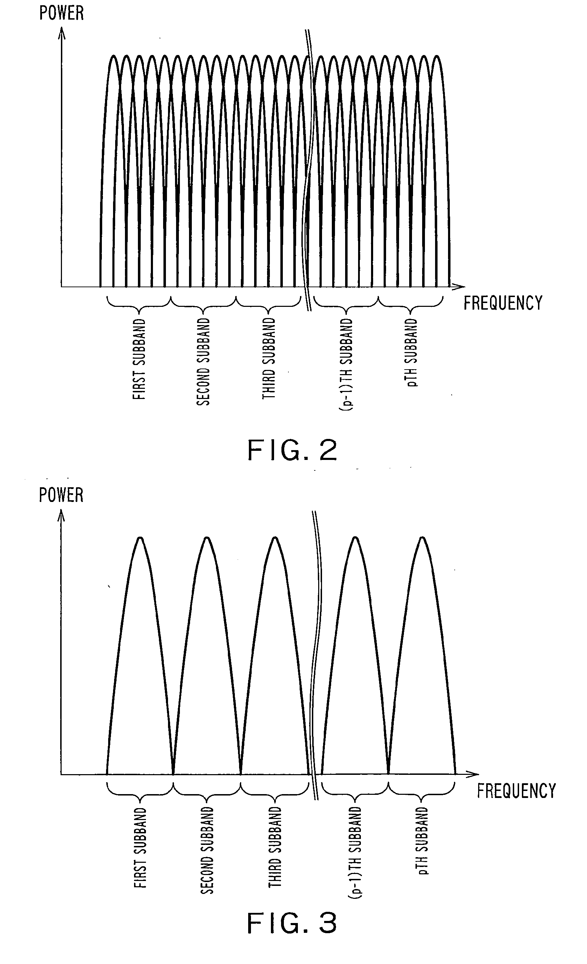

Suppose a multicarrier communication scheme such as OFDM (Orthogonal Frequency Division Multiplexing) or multicarrier CDMA (Code Division Multiple Access) is used for the downlink 36. In a multicarrier communication, communication is carried out using a plurality of subcarriers arranged on a frequency domain. An OFDM communication will be assumed as the multicarrier communication which will be explained below. FIG. 2 shows an arrangement of subcarriers when an OFDM communication is carried out. The OFDM communication realizes high spectrum efficiency by arranging subcarriers so as to be orthogonal to each other. As shown in FIG. 2, subcarriers are divided into groups to form a plurality of subbands. Here, first to pth subbands are formed. Each subband is made up of a single or a plurality of subcarriers. A plurality of terminals, a plurality of users or a plurality of channels are assigned to the first to pth subbands. Here, one subband is made up of a plurality of neighboring subcarriers, but subcarriers making up a subband need not always be adjacent to each other and one subband may be composed of a set of subcarriers located apart from each other.

A multicarrier communication scheme such as OFDM, multicarrier CDMA can also be used for the uplink 37. Or it is also possible to use FDMA (Frequency Division Multiple Access) communication. FIG. 3 is a schematic view showing a frequency utilization state in an FDMA communication. Single carriers (subbands) corresponding to a plurality of users are arranged on a frequency domain. That is, one user uses a single carrier (subband). In this embodiment, suppose the uplink 37 uses a frequency band different from that of the downlink 36 and the uplink 37 and downlink 36 can communicate simultaneously.

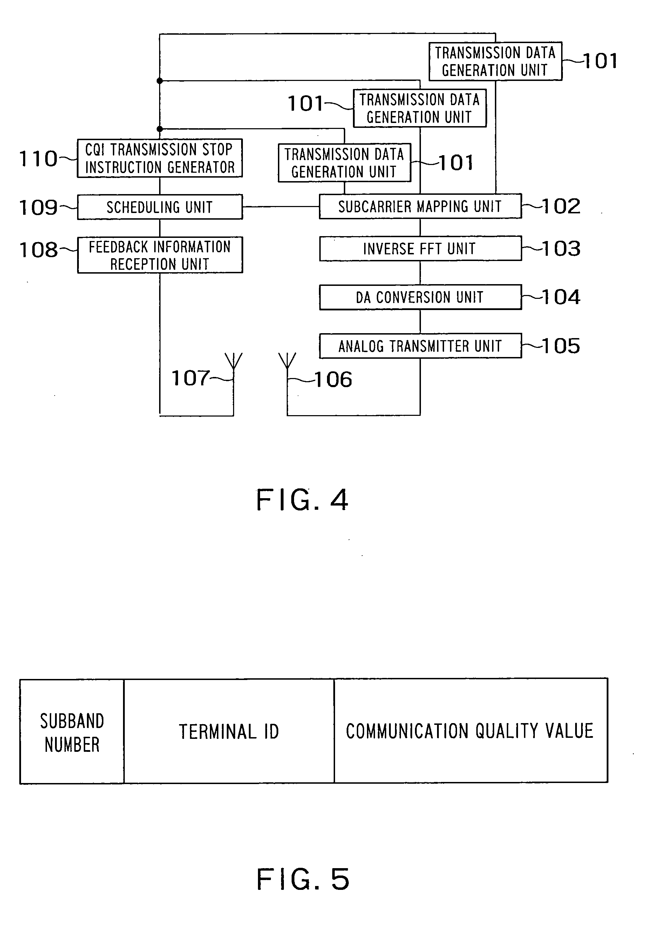

FIG. 4 shows an example of the configuration of the base station 35. This base station 35 is provided with a plurality of transmission data generation units 101, a subcarrier mapping unit 102, an inverse FFT (Inverse Fast Fourier Transform) unit 103, a DA (Digital-Analog) conversion unit 104, an analog transmitter unit 105, a base station transmission antenna 106, a base station reception antenna 107, a feedback information reception unit 108, a scheduling unit 109 and a CQI (Channel Quality Indicator) transmission stop instruction generator 110. The feedback information reception unit 108 corresponds, for example, to a reception unit, and the CQI (Channel Quality Indicator) transmission stop instruction generator 110 corresponds, for example, to a notifying unit.

Each transmission data generation unit 101 generates transmission data directed to each terminal and outputs the transmission data generated to the subcarrier mapping unit 102. The transmission data generation unit 101 at the same time generates known signals, that is, pilot signals, arranged with the terminal beforehand and adds the pilot signals generated to the transmission data. This pilot signals are used for the terminal not only to perform channel estimation but also to perform frequency synchronization, symbol synchronization or frame synchronization. Furthermore, the transmission data generation unit 101 also performs processing of inserting a CQI transmission stop instruction passed from the CQI transmission stop instruction generator 110, which will be described later, into the transmission data. The number of transmission data generation units 101 provided corresponds to the number of terminals in communication with the base station 35. However, it is also possible to further provide data generation units for multicast communication to send identical data to a plurality of terminals or broadcast communication to send identical data to all terminals. Or it is also possible to provide any one of the transmission data generation units 101 with a function of generating data for multicast or broadcast communication.

The subcarrier mapping unit 102 obtains modulated signals by assigning a plurality of transmission data passed from the plurality of transmission data generation units 101 to signal points according to a modulation scheme. Various modulation schemes such as BPSK: (Binary Phase Shift Keying), QPSK (Quadrature Phase Sift Keying), 8PSK, 16PSK, ASK (Amplitude Shift Keying), FSK (Frequency Shift Keying), 16QAM (Quadrature Amplitude Modulation) can be used for modulation of transmission data.

The subcarrier mapping unit 102 assigns the modulated signals acquired to OFDM subcarrier groups. Modulated signals corresponding to one transmission data are assigned to one or a plurality of subbands (the plurality of subbands may or may not be adjacent to each other). That is, one or a plurality of subbands are assigned to one terminal. When assigning subbands, suppose there are no overlapping subbands between different terminals. Subbands to which the modulated signals obtained from the transmission data are to be assigned are determined according to instructions from the scheduling unit 109, which will be described later. Here, the subcarrier mapping unit 102 may also receive information indicating subbands assigned to the respective terminals from the scheduling unit 109, modulate the information received and assign the modulated signals to control channels (specific subbands).

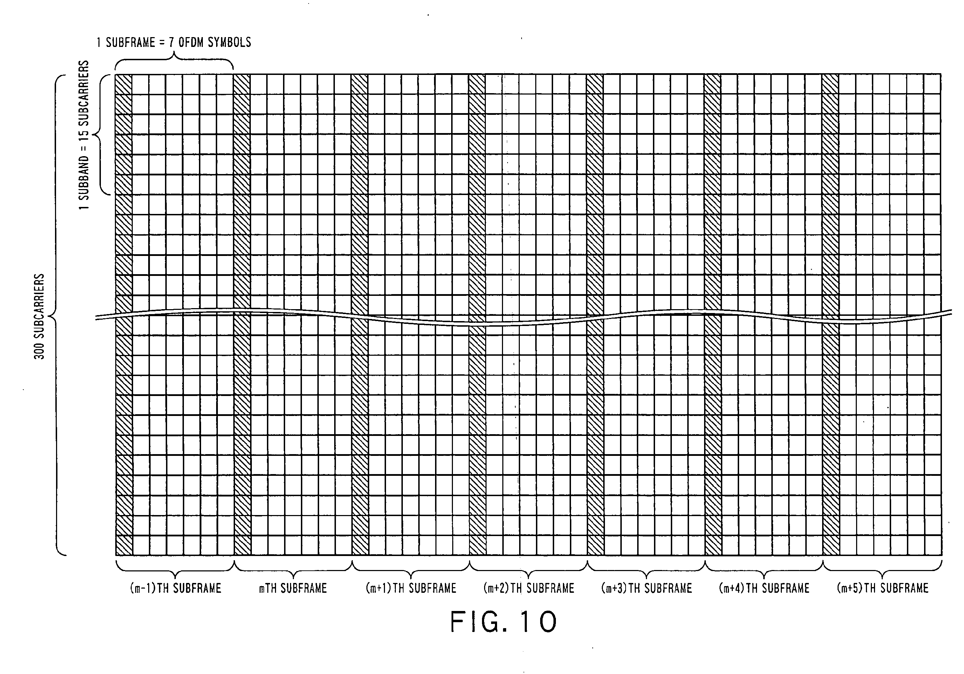

Here, an example of signal arrangement of a downlink will be shown in FIG. 10. Here, suppose an OFDMA (Orthogonal Frequency Division Multiple Access) communication whereby communication is performed using 20 subbands obtained by dividing OFDM subcarriers (300 subcarriers). One subframe is divided into 20 subbands (frequency channels) in the frequency domain. Here, one subframe is made up of seven OFDM symbols. Some of the 20 subbands may be used as control channels. Suppose 1 frame is made up of a plurality of subframes and subband assignment is updated on a frame boundary. Hatching areas in the figure are assumed to indicate that pilot signals are assigned.

In FIG. 4, the inverse FFT unit 103 applies an inverse fast Fourier transform to the modulated signals of each subcarrier assigned by the subcarrier mapping unit 102 and generates a transmission baseband signal.

The DA conversion unit 104 converts the transmission baseband signals generated to an analog signal and outputs it to the analog transmitter unit 105. The analog transmitter unit 105 up-converts the inputted analog signal to a radio frequency and emits the signal into space through the base station transmission antenna 106.

The base station reception antenna 107 receives a plurality of uplink radio signals transmitted from the respective terminals. The feedback information reception unit 108 down-converts the received radio signals to baseband signals and demodulates and decodes the baseband signals generated. In this way, a plurality of received data transmitted over a plurality of uplinks are obtained.

The scheduling unit 109 extracts CQI of each subband of the downlink from each of the plurality of received data and determines subbands (frequency channels) to be assigned to each terminal based on the CQI of each subband extracted. This is called "scheduling." As a scheduling method, various methods can be used and a round robin scheduling is well known. After determining subbands to be assigned to a terminal, the scheduling unit 109 instructs the CQI transmission stop instruction generator 110 to generate a CQI transmission stop instruction for instructing the terminal to stop transmission of CQI.

Here, an example of CQI is shown in FIG. 5. A CQI includes a "terminal ID" for identifying a terminal, a "subband number" for identifying a subband and a "communication quality value" which indicates communication quality of the subband. The "communication quality value" indicates, for example, reception power of the subband. In addition to this, the "communication quality value" may also indicate a "class number" when reception power of a subband is classified, or a "modulation scheme" or an "error correcting coding rate" which can be received using the subband. If, for example, the "terminal ID" is 8 bits, "subband number" is 5 bits and "communication quality value" is 8 bits, the bit size of one CQI is 21 bits.

Upon receiving an instruction for generating a CQI transmission stop instruction from the scheduling unit 109, the CQI transmission stop instruction generator 110 generates a CQI transmission stop instruction for the specified terminal. The CQI transmission stop instruction generator 110 then instructs the transmission data generation unit 101 to insert the CQI transmission stop instruction generated into the transmission data.

Here, the scheduling unit 109 may also report a CQI transmission start time indicating the time at which transmission of a CQI (quality information of the frequency channel (subband)) by each terminal should be started. In this case, the scheduling unit 109 instructs the transmission data generation unit 101 or subcarrier mapping unit 102 to insert the CQI transmission start time into the transmission data. The CQI transmission start time may be the same for the respective terminals or may differ from one terminal to another.

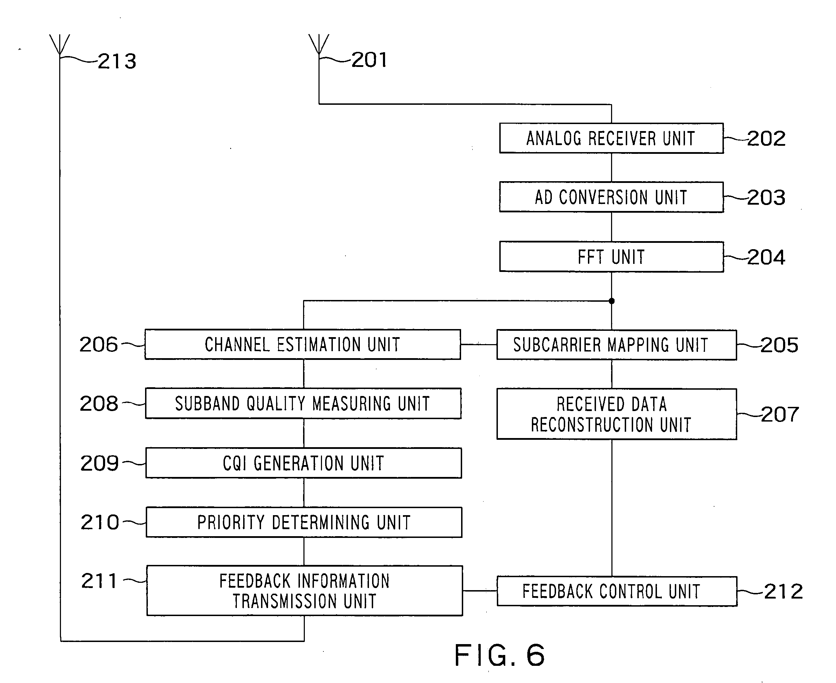

FIG. 6 shows a configuration example of the terminal. This terminal is provided with a terminal reception antenna 201, an analog receiver unit 202, an AD (Analog-Digital) conversion unit 203, an FFT (Fast Fourier Transform) unit 204, a subcarrier demapping unit 205, a channel estimation unit 206, a received data reconstruction unit 207, a subband quality measuring unit 208, a CQI generation unit 209, a priority determining unit 210, a feedback information transmission unit 211, a feedback control unit 212 and a terminal transmission antenna 213. The terminal reception antenna 201 and the analog receiver unit 202 corresponds, for example, a reception unit, the subband quality measuring unit 208 corresponds, for example, quality measuring unit, the priority determining unit 210 corresponds, for example, a priority setting unit, the feedback information transmission unit 211 corresponds, for example, a transmission unit, and the feedback control unit 212 corresponds, for example, a control unit.

The terminal reception antenna 201 receives radio signals transmitted from the base station and outputs the received radio signals to the analog receiver unit 202. The analog receiver unit 202 down-converts the inputted radio signals to a baseband signal and gives it to the AD conversion unit 203. The AD conversion unit 203 converts the baseband signal given from the analog receiver unit 202 to a digital signal through sampling and gives the digital signal to the FFT unit 204. The FFT unit 204 applies a fast Fourier transform (FFT) to the digital signal given from the AD conversion unit 203 and extracts received signals of each subcarrier. The FFT unit 204 outputs the received signals of each subcarrier extracted to the channel estimation unit 206 and subcarrier demapping unit 205.

The channel estimation unit 206 estimates a channel response (amplitude variation and phase variation or the like) for each subcarrier from the frequency characteristics of known signals, that is, pilot signals, included in the received signals of each subcarrier inputted from the FFT unit 204. It is possible to obtain a channel response by comparing the shape of the pilot signal arranged beforehand between the base station and terminal with the shape of the pilot signal arriving at the terminal after being distorted in the channel. The channel estimation unit 206 reports a channel response (channel estimation result) for each subcarrier to the subcarrier demapping unit 205 and subband quality measuring unit 208.

The subcarrier demapping unit 205 multiplies the received signals of each subcarrier inputted from the FFT unit 204 by an inverse characteristic of the channel response of each subcarrier reported from the channel estimation unit 206 and corrects the channel distortion of each subcarrier. The subcarrier demapping unit 205 gives the received signals of each subcarrier with channel distortion corrected to the received data reconstruction unit 207.

The received data reconstruction unit 207 demodulates and decodes the received signals of each subcarrier given from the subcarrier demapping unit 205 and obtains received data of each subband. The received data reconstruction unit 207 passes the received data of the subband assigned to the own terminal to an application (not shown). The received data reconstruction unit 207 extracts the information on the subband assigned to the own terminal from the received data of control carriers, for example. The received data reconstruction unit 207 may not demodulate and decode subbands assigned to other terminals. When the received data describes the CQI transmission start time or CQI transmission stop instruction, the received data reconstruction unit 207 reports the information to the feedback control unit 212.

The subband quality measuring unit 208 calculates the reception power of each subband (e.g., average power value of each subcarrier included in the subband) using the channel response of each subcarrier reported from the channel estimation unit 206. The subband quality measuring unit 208 then outputs the reception power of each subband calculated to the CQI generation unit 209.

The CQI generation unit 209 generates CQIs to be fed back to the base station for each subband from the reception power of each subband inputted from the subband quality measuring unit 208. The CQI generation unit 209 then passes CQIs of the respective subbands to the priority determining unit 210. Here, subbands with which the subband quality measuring unit 208 measures communication quality and subbands for which the CQI generation unit 209 generates CQIs include not only subbands to which transmission data is mapped for the own terminal but also subbands to which transmission data is mapped for other terminals.

The priority determining unit 210 ranks the plurality of CQIs generated by the CQI generation unit 209. As a ranking method, it is possible to rank CQIs in descending order of reception power when the base station uses, for example, round robin scheduling as the scheduling scheme. The priority determining unit 210 passes the set ranking together with the CQIs to the feedback information transmission unit 211. It is also possible to include the set ranking in CQIs and pass it to the feedback information transmission unit 211.

The feedback control unit 212 controls the feedback information transmission unit 211 based on a control instruction about the CQI feedback passed from the received data reconstruction unit 207. Examples of the control instruction include CQI transmission start time and CQI transmission stop instruction. The CQI transmission start time can also be preset in the feedback control unit 212. When the CQI transmission start time is passed, the CQI feedback start time is reported to the feedback information transmission unit 211. When the CQI transmission stop instruction is passed, the feedback control unit 212 reports an instruction that the CQI feedback should be stopped to the feedback information transmission unit 211. Furthermore, the feedback control unit 212 may also specify the number of CQIs to be fed back at a time to the feedback information transmission unit 211.

The feedback information transmission unit 211 transmits CQIs and stops transmission of CQI_{S}, according to the control from the feedback control unit 212. More specifically, when instructed from the feedback control unit 212 to start CQI feedback, the feedback information transmission unit 211 transmits CQIs passed from the priority determining unit 210 to the base station in descending order of priority. That is, the feedback information transmission unit 211 modulates the CQIs passed from the priority determining unit 210 and up-converts the modulated signals to generate radio signals. The feedback information transmission unit 211 then transmits the radio signals generated to the base station through the terminal transmission antenna 213. On the other hand, upon receiving the instruction for stopping CQI feedback from the feedback control unit 212, the feedback information transmission unit 211 stops transmitting CQIs even before transmission of CQIs of all subbands is completed.

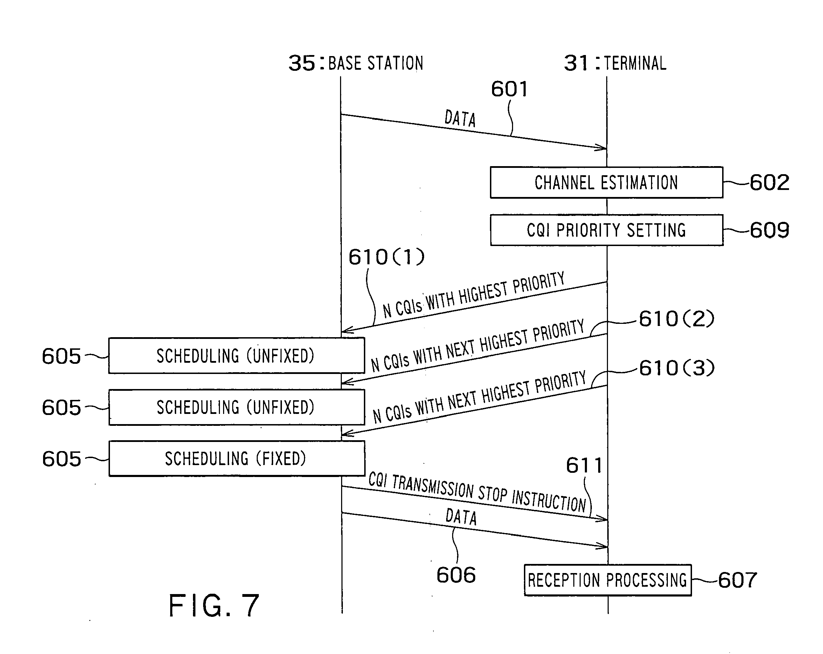

FIG. 7 is a sequence chart illustrating a flow of information exchanged between the base station and terminals. For simplicity of explanation here, only one terminal (terminal 31) will be illustrated.

The base station 35 transmits data over a downlink (601) and the terminal 31 receives this data. Pilot signals for channel estimation are added to this data. The data may also include a description of the CQI transmission start time, which is the time at which the terminal should start CQI feedback.

The terminal 31 performs channel estimation processing based on the data received from the base station 35 (602). The terminal 31 then performs CQI priority setting processing using the channel estimation result obtained by the channel estimation processing (609). That is, the terminal generates CQIs for each subband and ranks CQIs of each subband. Ranking is performed using, for example, the reception power of each subband or the ratio of the reception power to an average reception power of all subbands, or the like.

The terminal 31 performs feedback of N CQIs with high priority to the base station 35 (610 (1)). N, which is the number of CQIs fed back at a time may be defined beforehand in the system or may be determined by the feedback control unit 212 every time feedback is performed. Furthermore, in the case where the CQI transmission start time is described in the data, the terminal 31 starts feedback when the CQI transmission start time comes.

The terminal 31 performs feedback of N CQIs with the next highest priority (610 (2)) after feedback of N CQIs with the highest priority (610 (1)). After that, unless any CQI transmission stop instruction is notified from the base station 35, the terminal 31 continues CQI feedback while lowering priority (see 610 (3)).

The base station 35 extracts CQIs from the received data from the terminal 31 and the scheduling unit 109 performs scheduling (605). The base station 35 starts scheduling when the preset scheduling start time comes. As the scheduling method, the above described round robin scheduling or the like can be used.

This embodiment assumes that scheduling is performed using information described in CQIs as described above, but instead of this, for example, it is also possible to perform scheduling using the order in which fed back CQIs are received. Or it is also possible to perform scheduling using the CQI priority set by the terminal. In this case, suppose the terminal includes priority in CQIs to be fed back.

In FIG. 7, suppose a subband to be assigned to the terminal 31 are determined through scheduling three times. Since no CQIs are required any further from the terminal whose subband is determined, the base station 35 transmits a CQI transmission stop instruction to the terminal 31 (611). The CQI transmission stop instruction need not be sent singly, but may also be transmitted together with other data. Generally, higher spectrum efficiency can be obtained in that way.

Upon receiving the CQI transmission stop instruction, the terminal 31 stops CQI feedback until the next CQI transmission start time.

The base station 35 transmits data to the terminal 31 according to the assignment of the determined subband (606).

Here, when contention occurs among a plurality of terminals during scheduling (605) (when a plurality of terminals feed back CQIs of the same subband), full subbands may not be assigned to some terminals. In that case, the transmission of CQI transmission stop instructions to those terminals is postponed. As a result, those terminals continue to feed back CQIs and the base station 35 continues scheduling based on these CQIs. Scheduling is completed when assignments to all terminals are determined or a preset scheduling time expires.

Here, suppose the time period from the scheduling start time to the scheduling expiration time is set depending on the time required for scheduling. For example, when there are many terminals and contention frequently occurs among terminals, a longer time should be set and on the contrary when many subbands are provided and contention does not frequently occur, a shorter time should be set. The scheduling start time and scheduling expiration time can be periodic or set to arbitrary times. Furthermore, the above described CQI transmission start time preferably coincides with the scheduling start time. This embodiment assumes that the above described CQI transmission start time coincides with the scheduling start time.

Here, scheduling when the base station 35 uses round robin scheduling as the scheduling method will be explained. The base station 35 assigns subbands of good communication quality to terminals one by one in order based on CQIs fed back from the respective terminals first of all. A subband already assigned to a certain terminal will not be assigned to other terminals. After a first round assignment is completed, a second round assignment is started from the first terminal again in order. No subband will be assigned to a terminal for which an already requested number of subbands are secured at this time. Furthermore, when assignment of subband(s) to the terminal is not completed yet with only CQI(s) fed back until now from the terminal, the assignment work is suspended and the base station 35 waits for the next CQI to come from the terminal.

Here, if scheduling is performed when CQIs of all subbands to be scheduled are received as in the case of the conventional example, it is possible to assign a substantially equitable number of subbands to terminals. However, when there are many subbands, it is necessary to wait for an enormous number of CQIs to be fed back, which not only produces a delay in the processing at the base station but also requires an enormous amount of memory to store or control CQIs of all subbands for all terminals.

In contrast to this, according to this embodiment, CQIs are fed back from terminals in descending order of communication quality and scheduling is started based on CQIs of some subbands, and therefore the base station need not save an enormous number of CQIs and it is possible to reduce the hardware scale. Furthermore, when terminals feed back CQIs by describing priority therein and the base station performs scheduling using the priority described in the CQIs, it is possible to simplify the scheduling processing. That is, the base station simply needs to perform subband assignment processing (scheduling) based on priority and need not perform processing of searching for optimum subbands for the terminals.

Furthermore, according to the method for a terminal to feed back only CQIs of some subbands as in the case of the other conventional example, there is a possibility that some terminals may not be able to acquire subbands. However, according to this embodiment, a terminal continues to feed back CQIs according to priority until it receives a CQI transmission stop instruction, and therefore the base station can perform continuous scheduling and can thereby drastically reduce the number of terminals unable to acquire subbands.

In this embodiment, CQIs continue to be fed back unconditionally from a terminal until assignment of subbands is determined, but instead of this, the embodiment can also be adapted as follows. For example, only when assignment is not determined with first N CQIs fed back, the base station reports it to the terminal and the terminal receives the report and feeds back the next N CQIs to the base station.

Furthermore, in this embodiment, a CQI transmission stop instruction is sent to a terminal for which assignment is determined and it is thereby possible to reduce redundant CQI feedback. Therefore, it is possible to improve the spectrum efficiency of an uplink. This will be explained in further detail below using specific examples. Suppose a terminal feeds back CQIs of all subbands at a time. Furthermore, suppose a total of 1024 subcarriers are divided into groups of 16 subcarriers and a total of 64 subbands are formed on a downlink. If a CQI has 21 bits, the total size of CQIs corresponding to all subbands amounts to as large as 1.3 kbits. When, for example, 30 users feed back CQIs at the same time, approximately 40 kbits are sent at a time over an uplink. Even if a relatively long CQI feedback period of 10 msec is set, it can be seen that a transmission rate as high as 4 Mbps is required for CQI transmission. In contrast, according to this embodiment, if the number of CQIs that can be fed back at a time is limited to 4, it is possible to reduce the amount of instantaneous CQI feedback to 1/16, that is, 2.5 kbits. Furthermore, after assignment of subbands is determined, CQIs are no longer fed back, and therefore it is possible to use an uplink efficiently. Note that the subband assignment processing and transmission/reception processing of CQI transmission stop instructions per se take some time, and therefore redundant CQI feedback may also take place, but an amount of such redundant CQI feedback is considered small, which is considered to cause no problem.

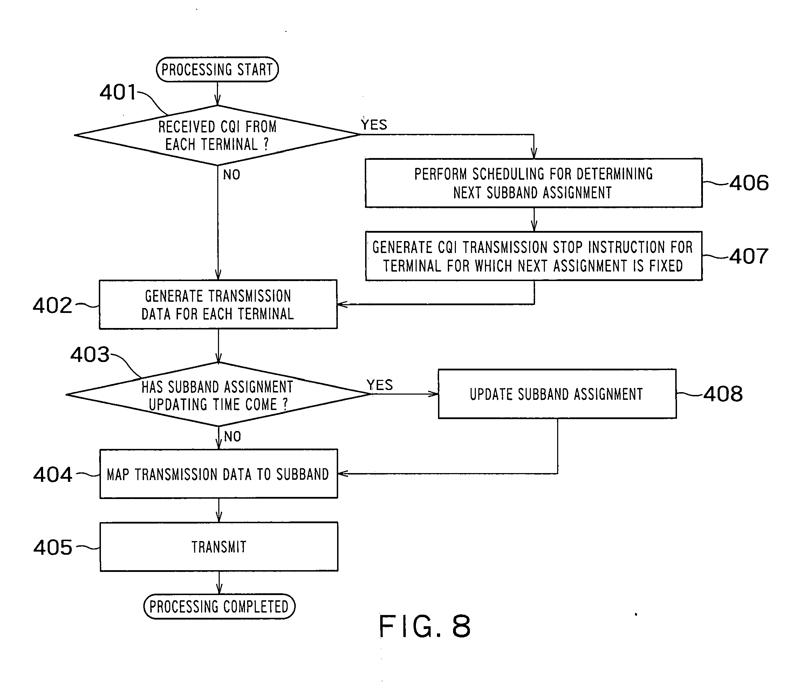

FIG. 8 is a flow chart showing a flow of operation by the base station 35.

The feedback information reception unit 108 of the base station 35 judges whether or not CQI has been received from each terminal (401). When no CQI has been received from each terminal (No in 401), the base station 35 performs normal transmission processing (402). Details of normal operation in 402 will be described later.

When a CQI has been received from each terminal (Yes in 401), the scheduling unit 109 then performs scheduling for determining assignment of subbands to each terminal (406). As described above, this embodiment assumes that the scheduling start time coincides with the CQI transmission start time. Here, when a plurality of terminals feed back CQIs of the same subband, suppose that the scheduling unit 109 assigns the subband to a terminal which has fed back a CQI first (in an earlier subframe). Furthermore, when a plurality of terminals feed back CQIs of the same subband simultaneously (in the same subframe), if priority is described in the CQI_{S}, suppose the scheduling unit 109 assigns a subband corresponding to the CQI to a terminal which has fed back the CQI with the highest priority. By so doing, even when a plurality of terminals contend for one subband, there will be no problem.

When there are terminals for which assignment has been determined through scheduling, the CQI transmission stop instruction generator 110 generates CQI transmission stop instructions for the terminals for which assignment has been determined (407). The determined assignment contents are stored in the scheduling unit 109.

Next, the transmission data generation unit 101 generates transmission data to each terminal (402). The transmission data generation unit 101 includes a CQI transmission stop instruction in the transmission data to the terminal for which a CQI transmission stop instruction is generated. The transmission data may also include a CQI transmission start time. The transmission data generation unit 101 may also generate broadcast data and multicast data.

Next, the scheduling unit 109 judges whether or not the time for updating assignment of subbands has come (403) and if this time has come (Yes in 403), the assignment of subbands is updated based on the scheduling result (408). The reason why the assignment of subbands is updated when the time for updating assignment of subbands has come is that it is not so desirable to change the assignment of subbands when there are still unassigned terminals. That is, this embodiment updates assignment to all terminals all together when the time for updating assignment of subbands has come without applying determined assignments to terminals successively. Of course, it is also possible to update assignment of subbands as soon as assignment of subbands is determined and the present invention is not limited to timing for updating assignment of subbands.

Next, the subcarrier mapping unit 102 maps transmission data directed to each terminal to each subband (404). The number of subbands to which transmission data is mapped is not limited to one and if there are a plurality of subbands assigned to a terminal, the transmission data can be mapped to the plurality of subbands, too. Furthermore, if there are unassigned and free subbands, those free subbands can also be used.

After this, the base station 35 transmits OFDM-modulated data as radio signals using the inverse FFT unit 103, DA conversion unit 104, analog transmitter unit 105 and base station transmission antenna 106 (405).

As described above, by starting scheduling as soon as some CQIs are received from a terminal, the base station can perform efficient scheduling while reducing a wait time for scheduling and further reduce memory for storing received CQIs.

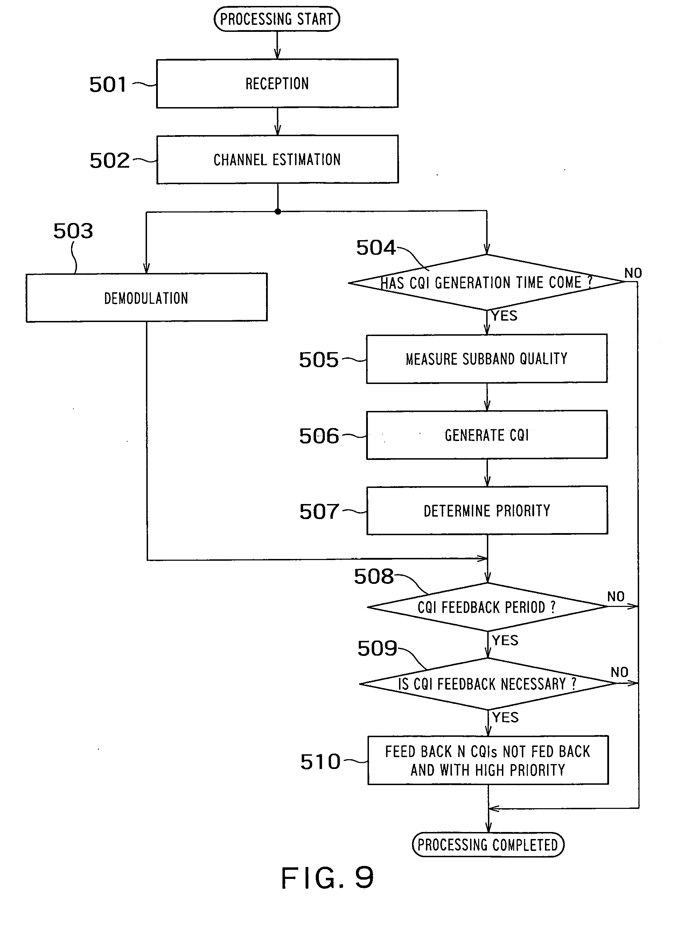

FIG. 9 is a flow chart showing a flow of operation of the terminal.

The terminal performs reception processing on radio signals of a downlink by using the terminal reception antenna 201, analog receiver unit 202, AD conversion unit 203 and FFT unit 204 to extract received signals of each subcarrier from the radio signals (501).

Next, the channel estimation unit 206 performs channel estimation processing using pilot signals of the extracted received signals of each subcarrier (502).

Next, the received data reconstruction unit 207 demodulates and decodes the received signals of each subcarrier whose distortion is corrected by the subcarrier demapping unit 205 to obtain received data for each subband (503). Subbands assigned to other terminals need not be demodulated or decoded. By this processing, unicast data, multicast data or broadcast data is obtained as the received data. When the received data includes a CQI transmission start time or CQI transmission stop instruction, this CQI transmission start time or CQI transmission stop instruction is passed to the feedback control unit 212.

Furthermore, after the channel estimation processing, the channel estimation unit 206 judges whether or not the CQI generation time (e.g., 1 subframe before the CQI transmission start time) has come (504). This judgment may be made by the CQI generation unit 209 or the feedback control unit 212.

When the CQI generation time has come (Yes in 504), the subband quality measuring unit 208 calculates reception power of each subband using the channel estimation result to measure the quality of subbands (505). Here, reception power is calculated as the quality of subbands, but it is also possible to obtain other indices such as signal to noise ratio (SNR).

Next, the CQI generation unit 209 generates a CQI of each subband based on the quality of each subband (506).

Next, the priority determining unit 210 assigns priority to the CQI of each subband (507). This priority basically corresponds to an order of subbands to be preferably used by the terminal for subsequent communications. Normally, acquiring subbands with high reception power provides a high possibility of obtaining good communication quality. Thus, suppose priority is given to CQIs in descending order of reception power.

Next, the feedback control unit 212 judges whether or not the CQI transmission start time has come (508), and if the CQI transmission start time has come (Yes in 508), the feedback control unit 212 judges whether or not a CQI transmission stop instruction has been received (509). When the CQI transmission stop instruction has not been received yet (Yes in 509), the terminal feeds back N CQIs with high priority of the CQIs which have been generated and not transmitted yet using the feedback information transmission unit 211 and terminal transmission antenna 213 (510). The terminal continues to feed back N CQIs at predetermined time intervals until a CQI transmission stop instruction arrives.

As described above, the terminal transmits CQIs in descending order of priority and it is thereby possible to reduce memory for storing CQIs on the base station side. Furthermore, the terminal stops feeding back CQIs when the CQI transmission stop instruction arrives, and therefore it is possible to suppress deterioration of a transmission rate on an uplink due to redundant CQI feedback.

### (Second Embodiment)

This embodiment will explain CQI feedback by a terminal and scheduling by a base station in detail.

As explained in the first embodiment, FIG. 10 shows an example of a downlink frame format. One subband includes 15 subcarriers and one subframe includes seven OFDM symbols. The total number of subcarriers is 300 and the total number of subbands is 20. Furthermore, suppose one frame includes a plurality of subframes and assignment of subbands is updated on a frame boundary. Furthermore, suppose the number of subbands required by the terminal for the downlink is four. Suppose the hatching areas in the figure denote subframes to which pilot signals are assigned.

Furthermore, suppose a base station 35 is communicating with a terminal 31, terminal 32 and terminal 33. Furthermore, suppose the terminal 31 to terminal 33 are currently receiving an mth subframe determined as a CQI generation time. Therefore, each terminal performs channel estimation using pilot signals and further calculates quality (here, reception power) of each subband from the calculated channel estimated value.

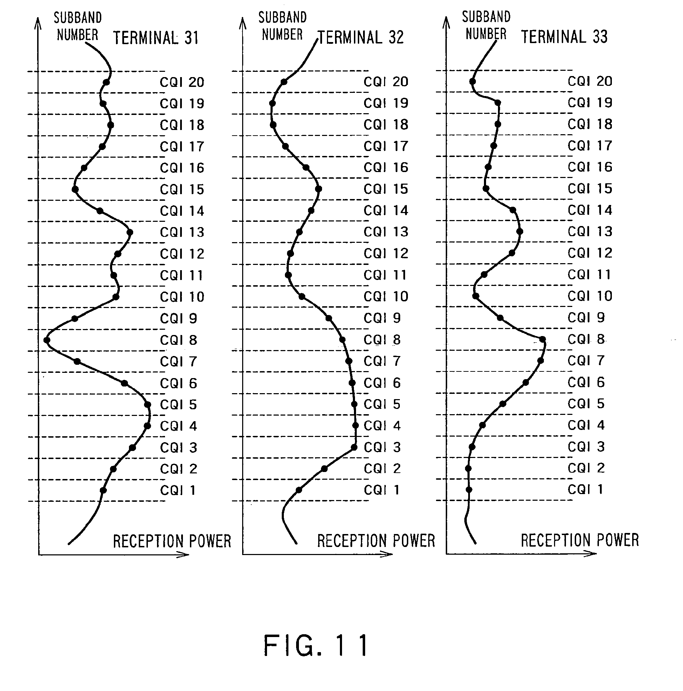

FIG. 11 shows an example of reception power of each subband calculated by each terminal.

The reception power of each subband is shown for each terminal. Since the radio communication channels from the base station 35 to the terminals 31 to 33 differs among the terminals, the channel estimated values differs among the three terminals.

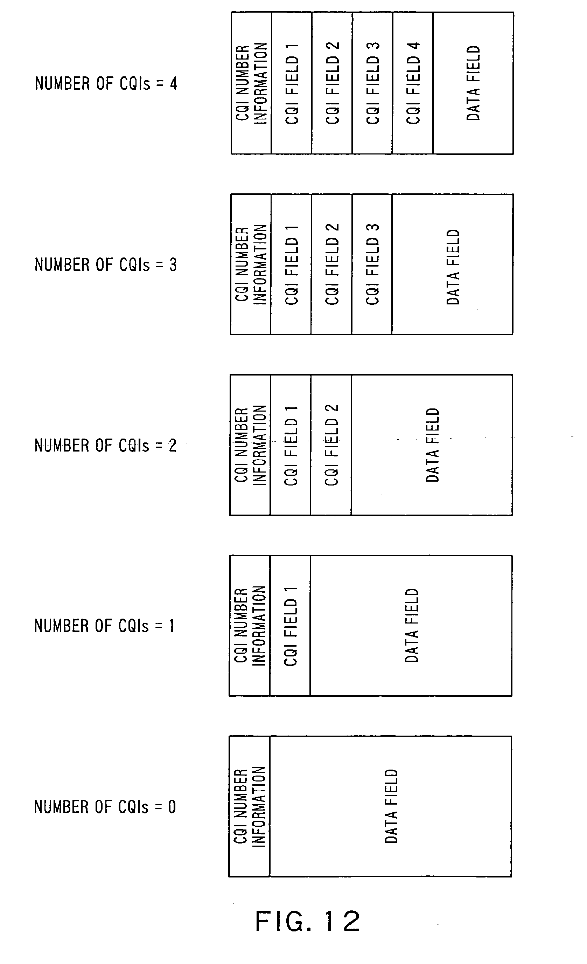

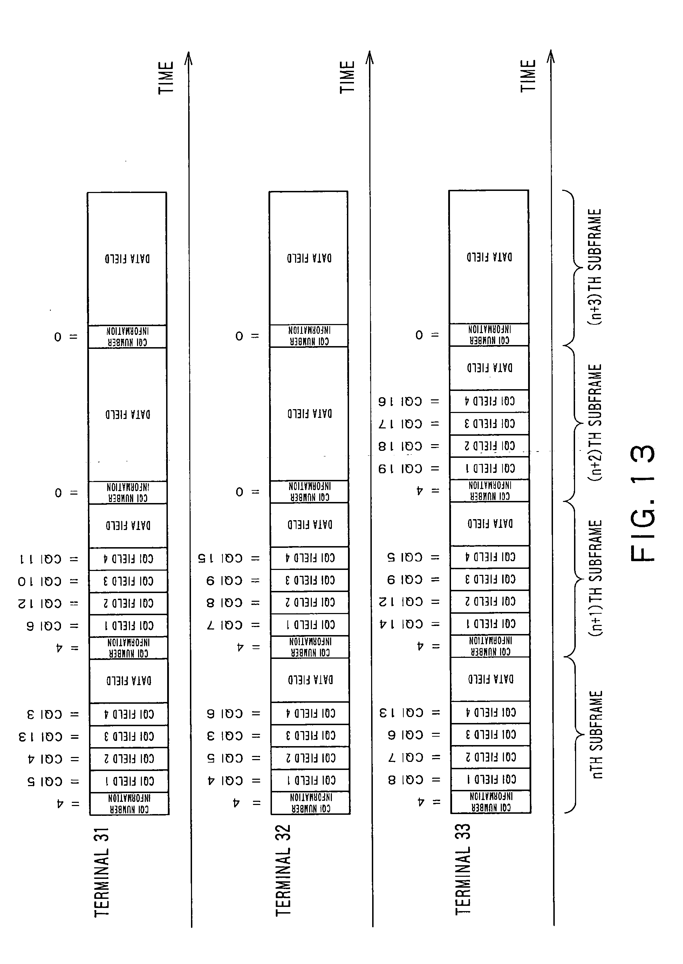

The terminal describes the reception power of each subband obtained in each CQI, sets priority in each CQI and feeds back the CQIs in descending order of priority. Here, an example of the frame format of an uplink is shown in FIG. 12. This frame format includes CQI number information, CQI fields corresponding to CQIs to be fed back and data field. One subframe includes 7 symbols. As the number of CQI fields decreases, the data field can be increased in size. The terminal assigns higher priority to CQIs of subbands with higher reception power and feeds them back first. An example of priority setting is shown below. Suppose a CQI corresponding to the xth subband is described as "CQIx." Then, as shown in the schematic view of uplink signals in FIG. 13, the terminal 31 is assigned priority in order of CQI5, CQI4, CQI13, CQI3, CQI6, CQI12, CQI10, CQI11, the terminal 32 is assigned priority in order of CQI4, CQI5, CQI3, CQI6, CQI7, CQI8, CQI9, CQI15, and the terminal 33 is assigned priority in order of CQ18, CQI7, CQI6, CQI13, CQI14, CQI12, CQI9, CQI5, CQI19, CQI18, CQI17, CQI16. Each terminal then feeds back the highest 4 CQIs of the total 20 CQIs in the nth frame to the base station. The terminal 31 feeds back CQI5, CQI4, CQI13, CQI3, the terminal 32 feeds back CQI4, CQI5, CQI3, CQI6 and the terminal 33 feeds back CQI8, CQI7, CQI6, CQI13. FIG. 13 shows the nth subframe to (n+3)th subframe.

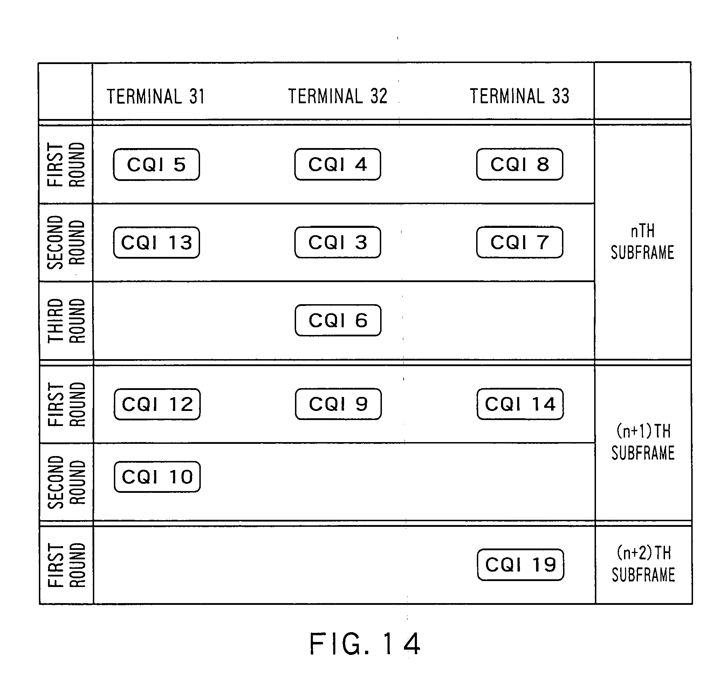

FIG. 14 shows scheduling carried out after the base station receives CQIs from the terminal 31 to terminal 33 in nth subframe.

First, the terminal 31 is assigned a subband corresponding to the CQI of the highest channel quality of the CQIs fed back by the terminal 31. According to round robin scheduling based on reception power, the channel quality is judged to be better as the reception power increases, and therefore the terminal 31 is assigned subband 5 corresponding to CQ15 first of all. Next, similar processing is carried out on the terminal 32 and terminal 33 and subband 4 and subband 8 are assigned respectively.

Next, since each terminal has not acquired four desired subbands which are the number of desired subband yet, a second round assignment is performed. The method is similar to that of the first round, but since subband 4 which is the second best communication quality for the terminal 31 is already assigned to the terminal 32, subband 13 which is the third best communication quality is assigned. Subband 3 is also assigned to the terminal 32 in the like manner. Subband 7 is assigned to the terminal 33 without contention.

Since no terminal has reached the desired number of subbands yet, a third round assignment is performed. However, since subband 3 is already assigned to the terminal 32, the terminal 31 has no subband available within the range of CQIs fed back. Therefore, the terminal 31 will not be assigned any further subbands and will continue to be subject to scheduling from the (n+1)th subframe onward. The terminal 32 can acquire subband 6 but has not acquired desired four subbands yet, and therefore it will still continue to be subject to scheduling from the (n+1)th subframe onward. The terminal 33 will also continue to be subject to scheduling from the (n+1)th subframe onward as in the case of the terminal 31.

In the following (n+1)th subframe, new four highest CQIs which have not been fed back yet are fed back from each terminal. When similar scheduling is performed, subband 9 is assigned to the terminal 32 in the first round and the terminal 32 acquires the fourth subband at this point of time. That is, assignment to the terminal 32 completes at this time. Therefore, the terminal 32 will be excluded from subsequent assignment operations. Furthermore, the terminal 31 also acquires the fourth subband in the second round scheduling and assignment to the terminal 31 completes at this time. On the other hand, since assignment to the terminal 33 within the range of CQIs fed back in the (n+1)th subframe does not complete yet, the terminal 33 will continue to be subject to scheduling in the (n+2)th subframe. Here, since the terminal 31 and terminal 32 for which scheduling has completed in the (n+1)th subframe need not feed back further CQIs, the base station transmits a CQI transmission stop instruction to the terminal 31 and terminal 32.

In the following (n+2)th subframe, four more CQIs are fed back from the terminal 33. Subband 19 is assigned to the terminal 33 in the first round and the terminal 33 acquires the fourth subband at this time and assignment to the terminal 33 also completes. Thus, the base station transmits a CQI transmission stop instruction to the terminal 33.

### (Third Embodiment)

This embodiment will explain an example of a method of generating CQIs.

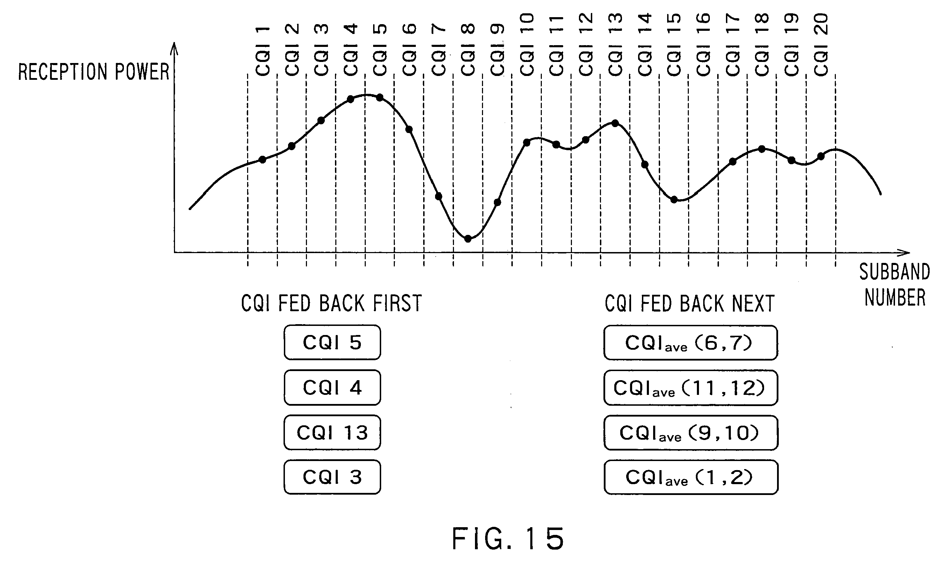

The lower part of FIG. 15 indicates CQIs to be fed back from a terminal to a base station. The upper part of FIG. 15 indicates a reception power of each subband calculated by the terminal. Suppose the terminal sets priority in descending order of reception power. When four CQIs can be fed back simultaneously, CQIs that are fed back first are CQI5, CQI4, CQI13 and CQI3. These CQIs correspond to CQIs of the four frequency channels (Y frequency channels) with high priority.

Suppose the next CQI to be fed back has quality obtained by averaging communication quality of a plurality of subbands (X frequency channels). For example, suppose each CQI fed back for the second time includes average communication quality obtained by averaging communication quality of two subbands. As a result, it is possible to feed back communication quality corresponding to a total of 8 (=2x4) subbands in the second feedback. That is, communication quality of two subbands can be collectively fed back with one CQI. This will be explained more specifically below.

When a CQI describing average communication quality of two subbands SBx1, SBx2 is assumed to be described as CQIave (SBx1,SBx2), CQIs to be fed back for the second time are CQIave (6,7), CQIave (11,12), CQIave (9,10) and CQIave (1,2). As for the eight subbands selected here, four subbands of good channel quality are selected and further subbands adjacent to the respective subbands are selected except the four subbands sent with the first feedback. At this time, when overlapping occurs and the total eight subbands cannot be obtained, suppose other subbands are selected so as to compensate for the lack. However, the selection method is not limited to the above described one, and it is also possible to select the highest eight subbands of high communication quality except the four subbands fed back at the first time, or use other methods. From the third feedback onward, CQIs averaged in the same way will also be fed back. The number of CQIs averaged may be two or greater.

As described above, according to this embodiment, it is possible to report communication quality of many subbands to the base station with a smaller amount of data. That is, subbands whose communication quality is fed back from the second time onward have poor communication quality compared to subbands whose communication quality is fed back for the first time and the desired level of the terminal is relatively low. Thus, from the second feedback onward, communication quality of a plurality of subbands is averaged even at the sacrifice of the accuracy of CQIs to a certain extent and the averaged communication quality is reported to the base station. This makes it possible to realize efficient scheduling and improve the utilization efficiency of the uplink.

### (Fourth Embodiment)

This embodiment will explain an example of a method of setting priority for CQIs.

For a base station to perform scheduling and change subbands for each terminal is processing troublesome to the base station and terminal and it is preferable not to change subbands as much as possible. If subbands are not changed, it is possible, for example, to reduce the number of bits required to report subbands assigned to the terminal from the base station to the terminal and avoid resetting (setting of filters or the like) of a receiver at the terminal. Therefore, it is preferable to avoid changing assignment as much as possible and assign the same subband as the last one assigned to the terminal (e.g., subband currently being used) to the terminal. Thus, a priority setting unit in this terminal sets the highest priority for a CQI of the last assigned subband. For example, the highest priority is set for the CQI of the subband currently being used. As a result, the base station can more easily reassign the same subband to the terminal and thereby simplify scheduling processing.

### (Fifth Embodiment)

This embodiment will explain an example of scheduling at a base station.

When a plurality of terminals feed back CQIs to one subband, scheduling must be performed in such a way that the subband is assigned to the only one terminal. Other terminals must be assigned to other subbands. Thus, this embodiment assumes that the subbands to be assigned to the other terminals are subbands at the least possible distance on the frequency domain from the subband corresponding to the CQI fed back by the terminal.

It is normally predictable that the subband corresponding to the CQI fed back by the terminal will -have communication quality similar to that of subbands adjacent to this subband on the frequency domain. Thus, when contention occurs and the subband corresponding to the CQI fed back by the terminal cannot be assigned, suppose a subband adjacent to the terminal on the frequency domain is assigned. This adjacent subband is an example of a free frequency channel closest to the frequency channel in which the above described contention has occurred on the frequency domain. That is, subbands need not always be adjacent to the subband in question and may be subbands of distant frequencies within a range where a change thereof can be regarded as of minor magnitude in terms of the frequency characteristic of the channel.

Furthermore, the above described contention is not limited to the case where a plurality of terminals feed back CQIs to the same subband simultaneously (that is, in the same subframe). When, for example, a plurality of terminals feed back CQIs at different times (that is, different subframes), there may also be a case where other terminals feed back a CQI corresponding to a subband which has already been assigned to a certain terminal by the base station. In this case, it is also possible to perform processing of changing the subband to be assigned to the other terminal to the above described subband adjacent thereto on the frequency domain.

As described above, this embodiment allows assignment even when a plurality of terminals contend for the same subband, and can thereby suppress transmission of additional CQIs.

## Claims

1. A radio communication method for carrying out downlink communication from a base station to radio terminals using a plurality of frequency channels, comprising:
receiving signals of the frequency channels from the base station at each radio terminal;
measuring communication quality of the frequency channels at each radio terminal;
setting priority for each frequency channel based on communication quality of the frequency channels at each radio terminal;
transmitting communication quality information indicating communication quality of each frequency channel in descending order of priority from each radio terminal to the base station;
receiving the communication quality information from each radio terminal at the base station;
scheduling frequency channels to be assigned to the radio terminals based on communication quality information from each radio terminal;
notifying a transmission stop instruction for instructing radio terminals for which the scheduling is completed to stop transmission of the communication quality information, to the radio terminals; and
stopping transmission of the communication quality information from radio terminals which has received the transmission stop instruction to the base station.

2. A radio terminal which is assigned one or more frequency channel to carry out downlink communication with a base station, comprising:
a reception unit configured to receive signals of a plurality of frequency channels from the base station;
a quality measuring unit configured to measure communication quality of each frequency channel;
a priority setting unit configured to set priority for each frequency channel;
a transmission unit configured to transmit communication quality information indicating communication quality of each frequency channel in descending order of priority to the base station; and
a control unit configured to provide a signal instructing to stop transmission of the communication quality information to the transmission unit upon receiving a transmission stop instruction for instructing to stop transmission of the communication quality information from the base station.

3. The radio terminal according to claim 2, wherein the priority setting unit determines priority of each frequency channel based on communication quality of each frequency channel.

4. The radio terminal according to claim 2, wherein the transmission unit starts transmission of the communication quality information when a transmission start time comes.

5. The radio terminal according to claim 2, wherein the transmission unit transmits information representing priority set for each frequency channel together with the communication quality information of each frequency channel.

6. The radio terminal according to claim 2, wherein the transmission unit transmits information indicating average communication quality obtained by averaging communication quality of Y frequency channels out of frequency channels other than X frequency channels with high priority as communication quality information of the Y frequency channels.

7. The radio terminal according to claim 2, wherein the priority setting unit sets highest priority for a latest frequency channel used.

8. A base station which carries out downlink communication with radio terminals using a plurality of frequency channels, comprising:
a reception unit configured to receive communication quality information indicating communication quality of each frequency channel from each of the radio terminals intermittently;
a scheduling unit configured to schedule frequency channels to be assigned to the radio terminals based on the communication quality information from each radio terminal; and
a notifying unit to configured to notify a transmission stop instruction for instructing radio terminals for which the scheduling is completed to stop transmission of the communication quality information, to the radio terminals.

9. The base station according to claim 8, wherein the reception unit receives information representing priority set for each frequency channel together with the communication quality information of each frequency channel and,
when contention for one frequency channel has occurred between two or more the radio terminals, the scheduling unit assigns the one frequency channel to a radio terminal which set highest priority for the frequency channel among the two or more the radio terminals.

10. The base station according to claim 8, wherein the scheduling unit assigns a frequency channel having best communication quality to the radio terminal out of the frequency channels whose communication quality information has been received from the radio terminal.

11. The base station according to claim 10, wherein the scheduling unit carries out the scheduling in accordance with a round robin scheduling scheme.
